# EUROPÄISCHE PATENTSCHRIFT

(11) **EP 0 896 790 B1**
(45) Veröffentlichungstag und Bekanntmachung des Hinweises auf die Patenterteilung: **23.01.2002**
(21) Anmeldenummer: 98114786.1
(22) Anmeldetag: 06.08.1998
(51) Int. Cl.: A01K 5/01

(54) **Vorrichtung zur Aufnahme von Tierfutter**
Animal feed container
Mangeoire pour animaux

(30) Priorität: 13.08.1997 DE 29714477 U
(43) Veröffentlichungstag der Anmeldung: 17.02.1999
(73) Patentinhaber: Gaspary, Dietrich, 89522 Heidenheim (DE)
(72) Erfinder: Gaspary, Dietrich, 89522 Heidenheim (DE)
(74) Vertreter: Lorenz, Werner, Dipl.-Ing.

(56) Entgegenhaltungen:
- GB-A- 2 304 273
- US-A- 3 991 719
- US-A- 5 782 374

## Beschreibung

Die Erfindung betrifft eine Vorrichtung zur Aufnahme von Tierfutter nach der im Oberbegriff des Anspruches 1 näher definierten Art. Eine solche Vorrichtung ist aus US-A-3 991 719 bekannt.

Aus der US 5,445,110 A ist eine Vorrichtung zur Aufnahme von Tierfutter bekannt, welche aus einer Schüssel und mehreren darin enthaltenen Einsätzen besteht. Die Einsätze sind mit Klebestreifen aneinander befestigt und weisen eine Griffmulde auf, mittels der sie auf einfache Art und Weise nach Gebrauch aus der Schüssel bzw. von der Einsatzpackung abgezogen und entnommen werden können. Im Bodenteil der Schüssel ist ein Gewicht vorgesehen, um ein Umkippen der Vorrichtung zu vermeiden.

Nachteilig ist dabei jedoch, daß bei einer Beschädigung des obersten Einsatzes, welcher gerade in Gebrauch ist, der darunterliegende Einsatz durch das sich in der Schüssel befindliche Futter verschmutzt werden kann. Darüber hinaus ist auf Grund der geringen Standfläche der Schüssel ein Umkippen der Schüssel während der Fütterung des Haustieres möglich.

In der US 5,577,461 A ist ein zweiteiliges Futternapfset bekannt, in welches in einen Teil das Trinkwasser und in den anderen Teil ein separater Futternapf bzw. Schüssel eingesetzt werden kann. Der Teil, der zur Aufnahme der separaten Schüssel vorgesehen ist, weist zwei konzentrische zylindrisch ausgeformte Stege auf. Der innere Steg ist zur Aufnahme der separaten Schüssel vorgesehen, wobei zwischen dem inneren und dem äußeren Steg ein Kreisring ausgebildet ist, in welchen Flüssigkeiten oder Feststoffe zur Abwehr von Insekten eingefüllt werden können. Darüber hinaus können Einsätze, welche aus recyclingfähigen Materialien bestehen, in die separate Schüssel eingelegt werden, womit eine Reinigung der separaten Schüssel nicht notwendig ist. Die Einsätze werden nach der Fütterung der Haustiere mit den verbleibenden Futterresten über den Hausmüll entsorgt.

Dabei ist jedoch von Nachteil, daß die beschriebene Lösung einen hohen Fertigungsaufwand aufweist und darüber hinaus die Gefahr besteht, daß die separate Schüssel aus der Halterung rutscht und das Haustier die zur Abwehr der Insekten vorgesehenen Flüssigkeiten oder Feststoffe zu sich nehmen könnte.

Der vorliegenden Erfindung liegt daher die Aufgabe zu Grunde, eine Vorrichtung zur Aufnahme von Tierfutter zu schaffen, welche einfach herzustellen ist, eine hohe Standsicherheit aufweist und auf einfache Art und Weise mit Einsätzen versehen werden kann, welche eine Verschmutzung des Basisteiles vermeidet.

Erfindungsgemäß wird diese Aufgabe durch die im kennzeichnenden Teil des Anspruches 1 genannten Merkmale gelöst. Somit wird ein Herausrutschen des Einsatzes aus dem Basisteil während der Fütterung des Haustieres vermieden. Damit wird eine Verschmutzung des Basisteiles durch das einzubringende Futter vermieden.

Vorteilhafte Ausgestaltungen und Weiterbildungen der Erfindung ergeben sich aus den Unteransprüchen und aus den nachfolgend anhand der Zeichnung prinzipmäßig beschriebenen Ausführungsbeispielen.

Es zeigt:
- Fig. 1: eine Draufsicht der Vorrichtung;
- Fig. 2: die Vorrichtung gemäß Fig. 1 im Schnitt entlang der Linie II-II;
- Fig. 3: eine dreidimensionale Darstellung einer Befestigungseinrichtung der Vorrichtung; und
- Fig. 4: eine weitere Ausführungsform der Befestigungseinrichtung der Vorrichtung.

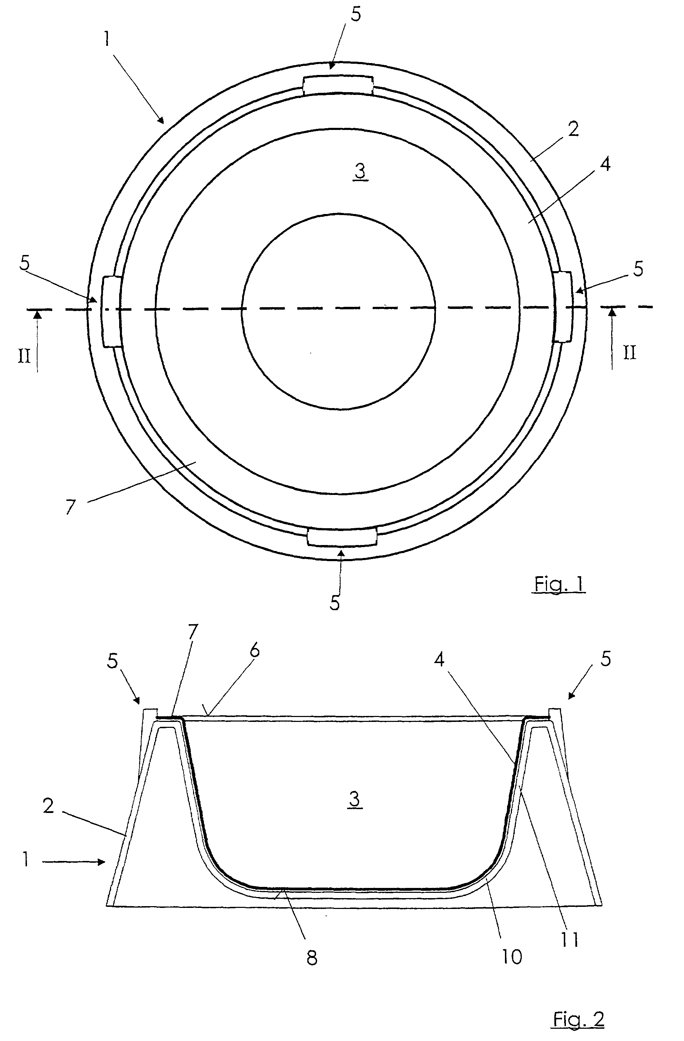

Gemäß Fig. 1 ist eine Vorrichtung zur Aufnahme von Tierfutter, insbesondere Futter für Haustiere, mit einem Basisteil 1, welches eine Standeinrichtung 2 und einen für die Aufnahme des Tierfutters ausgeformten schüsselartigen Hohlraum 3 aufweist, und einem in dem Basisteil 1 angeordneten Einsatz 4 dargestellt.

In Fig. 2 ist die Vorrichtung gemäß Fig. 1 im Schnitt entlang der Linie II-II dargestellt. An der Standeinrichtung 2 des Basisteiles 1 ist eine Befestigungseinrichtung 5, welche in dem vorliegenden Ausführungsbeispiel aus vier gleichmäßig über den Umfang des Basisteiles 2 verteilten Elementen besteht. Mittels der Befestigungseinrichtung 5 ist der Einsatz 4, der im Bereich einer Öffnung 6 einen flanschartigen Bund 7 aufweist, im Bereich des Bundes 7 an dem Basisteil 1 befestigbar.

Soll ein Tier gefüttert werden, so wird der Einsatz 4 in das Basisteil 1 eingelegt, wobei der Einsatz 4 so weit in das Basisteil 1 eingebracht wird, daß der Einsatz 4 mit seiner gesamten Außenfläche 8 an dem Basisteil 1 anliegt. Der Bund 7 wird auf eine Kreisscheibe 9 des Basisteiles 1, welche zwischen der Standeinrichtung 2 und dem Hohlraum 3 angeordnet ist, gedrückt, wobei zwischen der Befestigungseinrichtung 5 und dem Einsatz 4 eine Klemmwirkung erreicht wird. Darüber hinaus bildet die Kreisscheibe 9 eine Auflagefläche für den Bund 7 des Einsatzes 4 an dem Basisteil 1.

Die Klemmwirkung zwischen dem Einsatz 4 und dem Basisteil 1 im Bereich der Elemente der Befestigungseinrichtung 5 entsteht dadurch, daß der Außendurchmesser des Bundes 7 größer ausgebildet ist, als der Außendurchmesser der Kreisscheibe 9, wobei die Elemente der Befestigungseinrichtung 5 auf dem Außendurchmesser der Kreisscheibe 9 angeordnet sind. Dadurch wird im Bereich der Elemente der Befestigungseinrichtung 5 durch den Materialüberschuß des Einsatzes 4 derart eine Presszone ausgebildet, daß der Einsatz 4 sich in diesem Bereich von der Kreisscheibe 9 abhebt und sich neben der Presszone wieder auf der Kreisscheibe 9 ablegt. Damit wird erreicht, daß der Einsatz 4 gegen ein Abheben von dem Basisteil und auch gegen ein Verdrehen gegenüber dem Basisteil 1 gesichert ist.

In einer weiteren von der vorliegenden Ausführungsform abweichenden Ausgestaltung der Vorrichtung kann es vorgesehen sein, daß der Außendurchmesser des Bundes 7 kleiner ausgebildet ist als der Außendurchmesser der Kreisscheibe 9, wobei die Befestigungseinrichtung 5 auf einem Durchmesser der Kreisscheibe 9 angeordnet ist, der kleiner als der Außendurchmesser des Bundes 7 ausgebildet ist.

Die Standeinrichtung 2 ist, wie in Fig. 2 dargestellt, als ein Kegelstumpf ausgebildet, der sich von der Kreisscheibe 9 ausgehend bis zu der der Kreisscheibe 9 abgewandten Seite der Standeinrichtung 2 seinen Durchmesser vergrößert. Diese Ausgestaltung der Standeinrichtung 2 verleiht dem Basisteil 1 eine gute Standfestigkeit, womit ein Umkippen und somit ein Ausleeren des Tierfutters aus dem Einsatz 4 bzw. dem Basisteil 1 vermieden wird.

Der Hohlraum 3 wird von einem wannenartigen Bodenbereich 10 und einem seitlichen Bereich 11 begrenzt, wobei der seitliche Bereich als ein Kegelstumpf ausgebildet ist, dessen Durchmesser sich von der Kreisscheibe 9 ausgehend bis zu dem Bodenbereich 10 verkleinert.

Mit dieser Ausformung des Basisteiles 1 ist gewährleistet, daß der Einsatz 4 im befüllten Zustand von dem Basisteil 1 abgestützt wird. Damit kann der Einsatz 4 aus spröden, biologisch abbaubaren Materialien, wie beispielsweise gepreßtem Mais oder gepreßte Waffel, hergestellt werden, ohne daß der Einsatz 4 unter dem Eigengewicht des Tierfutters beschädigt werden kann und seine Funktion verliert.

Selbstverständlich liegt es im Ermessen des Fachmannes, den Einsatz 4 aus einem recyclebaren Material wie beispielsweise Altpapier herzustellen.

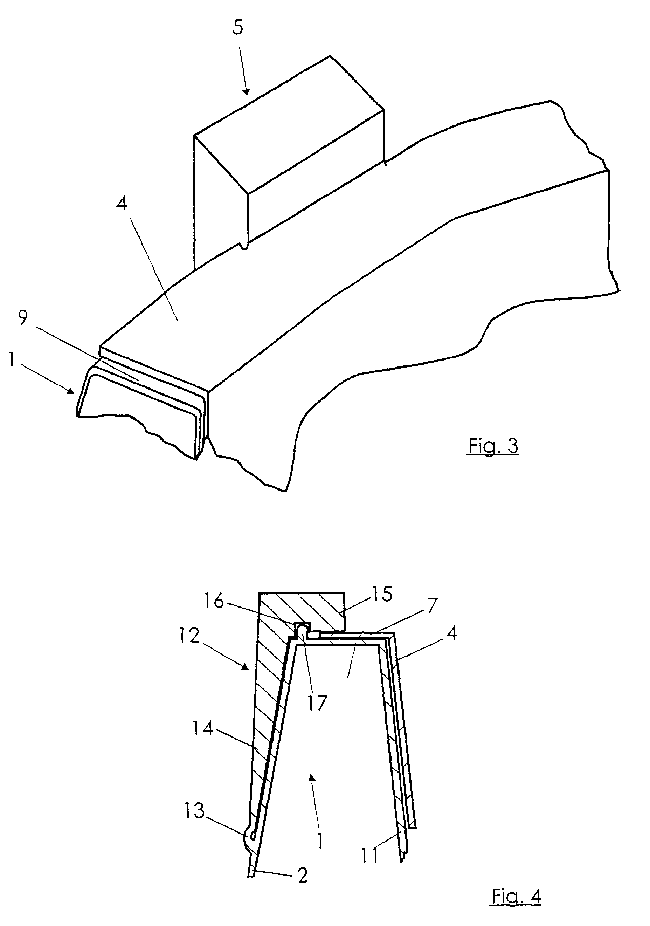

In Fig. 4 ist eine weitere Ausführungsform der Befestigungseinrichtung 5 gemäß Fig. 3 dargestellt. Die Befestigungseinrichtung 5 ist aus einem am Außenumfang des Basisteiles 1 angeordneten Spannteil 12 gebildet, wobei das Spannteil einstückig mit dem Basisteil 1 ausgeführt ist. Zwischen dem Spannteil 12 und dem Basisteil 1 ist eine flexible Verbindungsstelle 13 ausgebildet, mittels welcher das Spannteil 12 klappbar mit dem Basisteil 1 verbunden ist. Das Spannteil 12 weist eine Lasche 14 und einen Spannkopf 15 auf, wobei der Spannkopf 15 an seiner der Kreisscheibe 9 zugewandten Seite im Bereich der Lasche 14 eine Aussparung 16 aufweist.

An der dem Einsatz 4 zugewandten Seite der Kreisscheibe 9 ist eine Erhebung 17 ausgebildet, welche in die Aussparung 16 des Spannkopfes 15 in eingeklapptem Zustand des Spannteiles 12 eingreift.

Zur Befestigung des Einsatzes 4 an dem Basisteil 1 wird das Spannteil 12 mit seinem Spannkopf 15 über die Erhebung 17 geführt bis diese in der Aussparung 16 einrastet und das Spannteil 12 gegen ein selbsttätiges Rückklappen sichert. Dabei ist der Spannkopf 12 derart ausgebildet, daß der Bund 7 zwischen dem Spannkopf 15 und der Kreisscheibe 9 des Basisteiles 1 angeordnet bzw. eingeklemmt ist, womit der Einsatz 4 in dem Basisteil 1 befestigt ist.

## Patentansprüche

1. Vorrichtung zur Aufnahme von Tierfutter, insbesondere von Futter für Haustiere, mit einem Basisteil (1), welches eine Standeinrichtung (2) und einen für die Aufnahme des Tierfutters ausgeformten schüsselartigen Hohlraum (3) aufweist, und einem in das Basisteil einbringbaren schüsselartig ausgebildeten Einsatz (4), der eine Öffnung (6) und einen Boden aufweist und der im Bereich des Außenumfangs der Öffnung (6) einen sich wenigstens über Teilbereiche des Außenumfangs der Öffnung (6) erstreckenden flanschartigen Bund (7) aufweist,
**dadurch gekennzeichnet, daß**
die Standeinrichtung (2) des Basisteiles (1) eine sich wenigstens über Teilbereiche des Außenumfangs des Basisteiles (1) erstreckende Befestigungseinrichtung (5) aufweist, mittels welcher der Einsatz (4),
im Bereich des Bundes (7) an dem Basisteil (1) befestigbar ist.

2. Vorrichtung nach Anspruch 1,
**dadurch gekennzeichnet, daß**
der Einsatz (4) mit seiner gesamten Außenfläche (8) an dem Basisteil (1) anliegt.

3. Vorrichtung nach Anspruch 1 oder 2,
**dadurch gekennzeichnet, daß**
das Basisteil (1) eine Kreisscheibe (9) aufweist, welche zwischen der Standeinrichtung (2) und dem schüsselartigen Hohlraum (3) angeordnet ist.

4. Vorrichtung nach Anspruch 3,
**dadurch gekennzeichnet, daß**
die Kreisscheibe (9) als Auflage für den Bund (7) des Einsatzes (4) an dem Basisteil (1) vorgesehen ist.

5. Vorrichtung nach Anspruch 3 oder 4,
**dadurch gekennzeichnet, daß**
der Außendurchmesser des Bundes (7) größer ausgebildet ist als der Außendurchmesser der Kreisscheibe (9), wobei die Befestigungseinrichtung (5) an dem Außendurchmesser der Kreisscheibe (9) angeordnet ist.

6. Vorrichtung nach einem der Ansprüche 3 bis 5,
**dadurch gekennzeichnet, daß**
der Außendurchmesser des Bundes (7) kleiner ausgebildet ist als der Außendurchmesser der Kreisscheibe (9), wobei die Befestigungseinrichtung (5) auf einem Durchmesser der Kreisscheibe (9) angeordnet ist, der kleiner als der Aussendurchmesser des Bundes (7) ist.

7. Vorrichtung nach einem der Ansprüche 3 bis 6,
**dadurch gekennzeichnet, daß**
die Standeinrichtung (2) als ein Kegelstumpf ausgebildet ist, der sich von der Kreisscheibe (9) ausgehend bis zu der der Kreisscheibe (9) abgewandten Seite der Standeinrichtung (2) seinen Durchmesser vergrößert.

8. Vorrichtung nach einem der Ansprüche 3 bis 7,
**dadurch gekennzeichnet, daß**
der Hohlraum (3) von einem wannenartigen Bodenbereich (10) und einem seitlichen Bereich (11) begrenzt ist, wobei der seitliche Bereich (11) als ein Kegelstumpf ausgebildet ist, dessen Durchmesser sich von der Kreisscheibe (9) ausgehend bis zu dem Bodenbereich (10) verkleinert.

9. Vorrichtung nach einem der Ansprüche 1 bis 8,
**dadurch gekennzeichnet, daß**
der Einsatz (4) aus einem recyclebaren Material ausgebildet ist.

10. Vorrichtung nach einem der Ansprüche 1 bis 8,
**dadurch gekennzeichnet, daß**
der Einsatz (4) aus einem biologisch abbaubaren Material ausgebildet ist.

11. Vorrichtung nach einem der Ansprüche 1 bis 10,
**dadurch gekennzeichnet, daß**
die Befestigungseinrichtung (5) aus wenigstens einem am Außenumfang des Basisteiles (1) angeordneten Spannteil (12) gebildet ist.

12. Vorrichtung nach Anspruch 11,
**dadurch gekennzeichnet, daß**
das Spannteil (12) einstückig mit dem Basisteil (1) ausgebildet ist.

13. Vorrichtung nach Anspruch 11 oder 12,
**dadurch gekennzeichnet, daß**
zwischen dem Spannteil (12) und dem Basisteil (1) eine flexible Verbindungsstelle (13) ausgebildet ist, mittels welcher das Spannteil (12) klappbar mit dem Basisteil (1) verbunden ist.

14. Vorrichtung nach einem der Ansprüche 3 bis 13,
**dadurch gekennzeichnet, daß**
an der dem Einsatz (4) zugewandten Seite der Kreisscheibe (9) eine sich wenigstens über Teilbereiche des Außendurchmessers der Kreisscheibe (9) erstreckende Erhebung (17) ausgebildet ist.

15. Vorrichtung nach Anspruch 14,
**dadurch gekennzeichnet, daß**
das Spannteil (12) eine Lasche (14) und einen Spannkopf (15) aufweist, wobei der Spannkopf (15) an seiner der Kreisscheibe (9) zugewandten Seite im Bereich der Lasche (14) eine Aussparung (16) aufweist, in welche die Erhebung (17) der Kreisscheibe (9) einführbar ist.

16. Vorrichtung nach Anspruch 15,
**dadurch gekennzeichnet, daß**
der Spannkopf (15) derart ausgebildet ist, daß in eingeklapptem Zustand des Spannteiles (12) der Bund (7) zwischen dem Spannkopf (15) und dem Basisteil (1) angeordnet ist.

## Claims

1. Apparatus for receiving animal food, in particular pet food, having a base part (1), which comprises a standing device (2) and a worked-out bowl-like cavity (3) for receiving the pet food, and having an insert (4), which is designed like a bowl, is insertable into the base part and comprises an opening (6) and a base and which has in the region of the outer periphery of the opening (6) a flange-like collar (7) extending at least over sub-regions of the outer periphery of the opening (6),
**characterized in that**
the standing device (2) of the base part (1) comprises a fastening device (5), which extends at least over sub-regions of the outer periphery of the base part (1) and by means of which the insert (4) is fastenable in the region of the collar (7) to the base part (1).

2. Apparatus according to claim 1,
**characterized in that**
the insert (4) lies with its entire outer surface (8) against the base part (1).

3. Apparatus according to claim 1 or 2,
**characterized in that**
the base part (1) comprises a circular disk (9), which is disposed between the standing device (2) and the bowl-like cavity (3).

4. Apparatus according to claim 3,
**characterized in that**
the circular disk (9) is provided as a support for the collar (7) of the insert (4) on the base part (1).

5. Apparatus according to claim 3 or 4,
**characterized in that**
the outside diameter of the collar (7) is greater than the outside diameter of the circular disk (9), wherein the fastening device (5) is disposed adjacent to the outside diameter of the circular disk (9).

6. Apparatus according to one of claims 3 to 5,
**characterized in that**
the outside diameter of the collar (7) is smaller than the outside diameter of the circular disk (9), wherein the fastening device (5) is disposed on a diameter of the circular disk (9) which is smaller than the outside diameter of the collar (7).

7. Apparatus according to one of claims 3 to 6,
**characterized in that**
the standing device (2) is in the shape of a truncated cone, the diameter of which increases from the circular disk (9) up to the end of the standing device (2) remote from the circular disk (9).

8. Apparatus according to one of claims 3 to 7,
**characterized in that**
the cavity (3) is delimited by a trough-like base region (10) and a lateral region (11), wherein the lateral region (11) is in the shape of a truncated cone, the diameter of which decreases from the circular disk (9) up to the base region (10).

9. Apparatus according to one of claims 1 to 8,
**characterized in that**
the insert (4) is made of recyclable material.

10. Apparatus according to one of claims 1 to 8,
**characterized in that**
the insert (4) is made of a biodegradable material.

11. Apparatus according to one of claims 1 to 10,
**characterized in that**
the fastening device (5) is formed by at least one clamping part (12) disposed at the outer periphery of the base part (1).

12. Apparatus according to claim 11,
**characterized in that**
the clamping part (12) is formed integrally with the base part (1).

13. Apparatus according to claim 11 or 12,
**characterized in that**
formed between the clamping part (12) and the base part (1) is a flexible connecting point (13), by means of which the clamping part (12) is hinge-connected to the base part (1).

14. Apparatus according to one of claims 3 to 13,
**characterized in that**
formed on the side of the circular disk (9) facing the insert (4) is a raised portion (17), which extends at least over sub-regions of the outside diameter of the circular disk (9).

15. Apparatus according to claim 14,
**characterized in that**
the clamping part (12) comprises a strap (14) and a clamping head (15), wherein the clamping head (15) on its side facing the circular disk (9) has in the region of the strap (14) a recess (16), into which the raised portion (17) of the circular disk (9) is insertable.

16. Apparatus according to claim 15,
**characterized in that**
the clamping head (15) is designed in such a way that in the inwardly hinged state of the clamping part (12) the collar (7) is disposed between the clamping head (15) and the base part (1).

## Revendications

1. Dispositif destiné à contenir des aliments pour animaux, en particulier des aliments pour animaux domestiques, comprenant une partie de base (1) qui comporte un dispositif support (2) et une cavité (3) en forme de bol, agencée pour contenir l'aliment pour animaux, et un élément rapporté (4) en forme de bol qui peut être mis en place dans la partie de base, pourvu d'une ouverture (6) et d'un fond, et qui comporte, dans la région de la périphérie extérieure de l'ouverture (6), un rebord (7) en forme de collerette qui s'étend au moins sur des régions partielles de la périphérie de l'ouverture (6),
**caractérisé en ce que**
le dispositif support (2) de la partie de base (1) comporte un dispositif de fixation (5) qui s'étend au moins sur des régions partielles de la périphérie extérieure de la partie de base (1), et au moyen duquel l'élément rapporté (4) peut être fixé à la partie de base (1) dans la région du rebord (7).

2. Dispositif selon la revendication 1,
**caractérisé en ce que**
l'élément rapporté (4) est appuyé sur la partie de base (1) par toute sa surface extérieure (8).

3. Dispositif selon la revendication 1 ou 2,
**caractérisé en ce que**
la partie de base (1) comporte un plateau circulaire (9) qui est disposé entre le dispositif support (2) et la cavité (3) en forme de bol.

4. Dispositif selon la revendication 3,
**caractérisé en ce que**
le plateau circulaire (9) est prévu pour servir d'appui au rebord (7) de l'élément rapporté (4) sur la partie de base (1).

5. Dispositif selon la revendication 3 ou 4,
**caractérisé en ce que**
le diamètre extérieur du rebord (7) est plus grand que le diamètre extérieur du plateau circulaire (9), le dispositif de fixation (5) étant disposé sur le diamètre extérieur du plateau circulaire (9).

6. Dispositif selon l'une des revendications 3 à 5,
**caractérisé en ce que**
le diamètre extérieur du rebord (7) est plus petit que le diamètre extérieur du plateau circulaire (9), le dispositif de fixation (5) étant disposé sur un diamètre du plateau circulaire (9) qui est plus petit que le diamètre extérieur du rebord (7).

7. Dispositif selon l'une des revendications 3 à 6,
**caractérisé en ce que**
le dispositif support (2) a la forme d'un tronc de cône dont le diamètre s'agrandit depuis le plateau circulaire (9) jusqu'au côté du dispositif support (2) qui est éloigné du plateau circulaire (9).

8. Dispositif selon l'une des revendications 3 à 7,
**caractérisé en ce que**
la cavité (3) est limitée par une région de fond (10) en forme de cuvette et une région latérale (11), la région latérale (11) ayant la forme d'un tronc de cône dont le diamètre se rétrécit depuis le plateau annulaire (9) jusqu'à la région de fond (10).

9. Dispositif selon l'une des revendications 1 à 8,
**caractérisé en ce que**
l'élément rapporté (4) est réalisé en une matière recyclable.

10. Dispositif selon l'une des revendications 1 à 8,
**caractérisé en ce que**
l'élément rapporté (4) est réalisé en une matière biodégradable.

11. Dispositif selon l'une des revendications 1 à 10,
**caractérisé en ce que**
le dispositif de fixation (5) est formé d'au moins un élément de serrage (12) disposé à la périphérie extérieure de la partie de base (1).

12. Dispositif selon la revendication 11,
**caractérisé en ce que**
la partie de serrage (12) est réalisée d'une seule pièce avec la partie de base (1).

13. Dispositif selon la revendication 11 ou 12,
**caractérisé en ce que,**
entre la partie de serrage (12) et la partie de base (1), est formée une zone de liaison flexible (13) au moyen de laquelle la partie de serrage (12) est reliée à la partie de base (1) de façon rabattable.

14. Dispositif selon l'une des revendications 3 à 13
**caractérisé en ce que,**
sur le côté du plateau circulaire (9) qui est dirigé vers l'élément rapporté (4), est ménagée une protubérance (17) qui s'étend au moins sur des régions partielles du diamètre extérieur du plateau circulaire (9).

15. Dispositif selon la revendication 14,
**caractérisé en ce que**
la partie de serrage (12) comporte une patte (14) et une tête de serrage (15), la tête de serrage (15) comportant, sur son côté dirigé vers le plateau circulaire (9), dans la région de la patte (14), un évidement (16) dans lequel peut s'engager la protubérance (17) du plateau circulaire (9).

16. Dispositif selon la revendication 15,
**caractérisé en ce que**
la tête de serrage (15) est configurée de manière que, dans l'état rabattu vers l'intérieur de la partie de serrage (12), le rebord (7) est disposé entre la tête de serrage (15) et la partie de base (1).
